# EUROPEAN PATENT APPLICATION

(11) **EP 4 643 621 A1**
(43) Date of publication of application: **05.11.2025**
(21) Application number: 24174077.8
(22) Date of filing: 03.05.2024
(51) Int. Cl.: A01B 15/06, A01B 23/02, A01B 35/22

(54) **ASSEMBLY FOR A PLOUGH OF AN AGRICULTURAL SOIL WORKING MACHINE, PLOUGH**

(71) Applicant: Kverneland Group Operations Norway AS, 4353 Klepp Stasjon (NO)
(72) Inventor: BRYNE, Björn, 4353 Klepp Stasjon (NO)
(74) Representative: Bittner, Thomas L.

(57) **Abstract**

The present disclosure refers to an assembly (1) for a plough of an agricultural soil working machine, comprising: a first non-wearing plough part (2) configured to hold a wearing working tool (10) getting in contact with soil in soil working operation; a second non-wearing plough part (4) having the wearing working tool (10) attached to the second non-wearing plough part (4); a first connecting part (7) attached to the first non-wearing part (2); a second connecting part (8) attached to the second non-wearing plough part (4); and a connection detachably connecting the first connecting part (7) and the second connecting part (8); wherein the second non-wearing plough part (4) is tool-free and detachably mounted to the first non-wearing plough part (2) by the connection. Further, a plough for an agricultural soil working machine, an agricultural soil working machine, and a spare part for an assembly for a plough of an agricultural soil working machine are provided.

## Description

The present disclosure refers to an assembly for a plough of an agricultural soil working machine, a plough, an agricultural machine, and a spare part for an assembly for a plough of an agricultural soil working machine.

### Background

Different types of agricultural machines may be provided with a plough for soil cultivation, such as tilling or ploughing. Generally, tilling is an agricultural preparation of the soil by breaking the soil apart mechanically. Ploughing may be considered a type of tilling. It is a more intense version of tilling. Instead of scraping the topsoil for a casual sift through, ploughing may provide for forceful overturning and mashing of the soil to reveal the soil underneath the topsoil.

In general, a plough is a tool for loosing or turning the soil before sawing seed or planting. Primary purpose of ploughing is to turn over the uppermost soil. With respect to an assembly for a plough, there are plough parts which in operation are in contact with the soil to be cultivated and which, therefore, may be referred to as wearing parts of the plough, since soil contact in operation will be wearing such plough part. On the other hand, there are plough parts which do not contact the soil in operation and, therefore, do not wear due to soil contact. Such plough parts may be referred to as non-wearing plough part.

In document EP 1 259 105 B2 a replaceable wear part for mounting on a leading edge of a working tool of a plough assembly is disclosed. The leading edge and the wear part are having co-operative guide formations extending generally perpendicular to the leading edge and which provide a socket and projection type of slidable inter-fit and allow the wear part to slight in a direction generally perpendicular to the leading edge. The co-operative guide formations are arranged to exert a wedging action on the wear part so that the greater the distance travelled, the stronger will be the frictional engagement forces acting between the guide formations, whereby the wear part can be driven by a force extending generally perpendicular to the leading edge in order to take up a working position in which it is secured and locked against displacement from the working position by frictional inter-engagement between the guide formations on the wear part and the leading edge. Without need for threaded or other separate removable fasteners, said co-operative guide formations allowing the wear part to slide in a direction generally perpendicular to the leading edge. The guide formations are defined by walls or faces which are each of matching V-shape in cross section to oppose relative rotation of the wear part about its longitudinal axis. The guide formations of the wear part are provided on opposed edges of a rearwardly-projecting mounting portion of the wear part. The guide formations of the working tool are provided on opposed site walls of a socket portion of the working tool.

Document EP 2 689 647 A1 discloses a soil working device, comprising: a working implement provided with an operating portion for interacting with the soil and with a connecting portion; a supporting element fixable to said movable agricultural machine and arranged for supporting said agricultural implement; a connecting element associated with one end of said supporting element and arranged for receiving and coupling with, said connecting portion of said agricultural working implement in an assembled condition; a locking pin that is slidably associated with a first seat of said connecting element and is movable between a working position, wherein the locking pin engages a second seat of said working implement such as to lock the latter to said connecting element in said assembled condition, and a disengaged position wherein said locking pin does not engage said second seat to enable said working implement to be disengaged from said connecting element; the first seat and the second seat comprise respective through openings and include respectively a first opening and a second opening having dimensions and a shape that are such as to enable opposite ends of the locking pin to be reached and interacted with, in particular by a dismantling tool, such as to move the locking pin between the working position and the disengaged position.

### Summary

It is an object to provide an assembly for a plough of an agricultural soil working machine, a plough, an agricultural machine, and a spare part for an assembly for a plough of an agricultural soil working machine which allow for efficient and flexible customizing a plough for different working tasks such as soil cultivation under different soil conditions.

For solving the object, an assembly for a plough of an agricultural soil working machine according to the independent claim 1 is provided. Further, a plough, an agricultural machine, and a spare part for an assembly for a plough of an agricultural soil working machine according to claims 14 to 16 is provided. Further aspects are disclosed in dependent claims.

According to an aspect, an assembly for a plough of an agricultural soil working machine is provided, the assembly comprising: a first non-wearing plough part configured to hold a wearing working tool getting in contact with soil in soil working operation; a second non-wearing plough part having the wearing working tool attached to the second non-wearing plough part; a first connecting part attached to the first non-wearing part; a second connecting part attached to the second non-wearing plough part; and a connection detachably connecting the first connecting part and the second connecting part. The second non-wearing plough part is tool-free and detachably mounted to the first non-wearing plough part by the connection.

According to further aspects, a plough for an agricultural soil working machine, and an agricultural machine are provided. The plough may be configured for at least one of tilling (disc plough), cultivating, and ploughing.

According to still another aspect, a spare part for an assembly for a plough of an agricultural soil working machine is provided, comprising: a second non-wearing plough part configured to hold a wearing working tool getting in contact with soil in soil working operation; and a second connecting part attached to the second non-wearing part. The second connecting part is configured to engage with a first connecting part attached to a first non-wearing plough part in a connection detachably connecting the first connecting part and the second connecting part, thereby, tool-free and detachably mounting the second non-wearing plough part to the first non-wearing plough part by the connection.

The first and second non-wearing plough part are connected detachably by means of the connection between the first and second connecting part. Such connection allows for tool-free establishing and separating or releasing the connection. Different wearing working tools can easily be connected to the first non-wearing plough part which is to hold the wearing working tool in soil working operation. This allows for flexible and efficient configuration of the assembly for the plough independence on specific working task.

In some embodiments, connecting the first and second non-wearing plough part may comprise application of one or more components that allow for manual adjustment or manipulation (e.g. by snap or lock into place) without requiring supplementary tool such as screws, pins, bolts, and / or other fasteners.

With respect to some embodiments, a tool-free (without need for some tool) adjustment mechanism may be provided which is operable tool-free by a user for adjusting settings or configurations using knobs, levers, or other accessible controls without needing wrenches, hammers or screwdrivers.

The non-wearing plough parts are free of wearing due to the direct soil contact in operation. The non-wearing plough parts may not get in direct contact with the soil in operation. Contrary, the wearing working tool is to get in direct contact with the soil in soil working or soil cultivating operation, such as tilling or ploughing. Because of such soil working contact the working tool is wearing.

The wearing working tool may be attached to the second non-wearing plough part detachably or non-detachably. For example, for detachable mounting a threaded or some other fastener connection may be provided. Similarly, the first connecting part may be attached to the first non-wearing plough part detachably or non-detachably.

One or more wearing plough parts such as wearing working tools may be attached to the second non-wearing plough part. The one or more wearing plough parts may be provided on one or more sides of the second non-wearing plough part. For example, wearing plough parts may be attached on opposite sides of the second non-wearing plough part. The wearing working tool, by means of the connection between the first and second connecting part, may be attached to or hold by the first non-wearing plough part free of direct contact between the wearing working tool and the first non-wearing plough part.

The first connecting part and the second connecting part may be positively connected in the connection. The first and second connecting part are form-locked or form-fitted in such embodiment.

The detachable connection may comprise a sliding mechanism configured to guide relative movement of the first connecting part and the second connecting part with respect to each other between a start position in which the first connecting part and the second connecting part are in first contact for establishing the connection and an end position in which the connection between the first connecting part and the second connecting part is established. In the course of establishing the connection between the first and second connecting part, a first contact is established in the start position in which the first and second connecting part are aligned for the following sliding or guiding. At least in the end position the first and second connecting part are positively or form-locked connected. During sliding between the start and end position sliding may be oriented essentially in a horizontal direction.

In an embodiment, a method for connecting the first connecting part and the second connecting part detachably by means of the connection comprising the sliding mechanism in the assembly for the plough may be provided. The method may comprise the following: receiving a plough part which is at least one of the second connecting part, the second non-wearing plough part, and the wearing working tool on a support element holding, and supporting the plough part at a height above ground during sliding between the start and end position. With respect to the height above ground supported by the support element, the support element which may also be referred to as support table may be adjustable. Further, the support element may comprise a moving device configured for moving the support element with the plough part received on the support element while connecting the first and second connecting part. For example, the moving device may comprise one or more rollers or sliders configured to move the support element on ground.

The first connecting part and the second connecting part may be in frictional engagement in the end position. With respect to such embodiment, the first and second connecting part are in frictional engagement, but not locked with respect to releasing or separating the connection (frictional inter-engagement). The sliding mechanism which may also be referred to as guiding mechanism may be provided with a conical shape provided to exert a wedging action on the second connecting part so that the greater the distance travelled because of relative movement between the first and second connecting part during sliding, the stronger will be frictional engagement forces acting between the first and second connecting part, for example, between guide formations provided on the first and second connecting part. Thereby, the second connecting part can be driven by a force extending generally parallel to the working direction in order to take up the end position which may also be referred to as working position, in which the first and second connecting part are positively connected by frictional inter-engagement. Without need for threaded or other separate removable fasteners, the co-operative guide formations provided on the first and second connecting part allow the second non-wearing plough part to slide in a direction generally parallel to the working direction and provide a wedge-type inter-engagement between the guide formations.

With respect to the conical shape, an angle of inclination with respect to the direction along which relative movement between the first and second connecting part is performed while establishing the detachable connection may be at least about 5 degrees, preferably at least about 9 degrees, more preferably at least about 12 degrees, and even more preferably at least about 15 degrees. The angle of inclination may be equal to or smaller than about 50 degrees or 30 degrees, preferably equal to or smaller than about 20 degrees. In some embodiments, the angle of inclination may be between about 9 and about 10 degrees, preferably between about 12 to about 15 degrees, or between about 15 to about 20 degrees thereby, limiting frictional forces acting at least in the end position of the frictional engagement. In an embodiment, the angle of inclination may be about 12 degrees.

The sliding mechanism may be configured to guide the relative movement of the first connecting part and the second connecting part along a guiding direction essentially parallel to the working direction of the plough.

Forces or force components exerting on the plough or plough parts in a direction opposite to the working direction in case of soil working or soil cultivating may act against releasing the connection between the first and second connecting part.

The sliding mechanism may comprise a male guiding element and a female guiding element positively received in the male guiding element for the relative movement of the first connecting part and the second connecting part between the start position and the end position. The male and female guiding elements may comprise guide formations for positively connecting the first and second connecting part at least in the end position. The male and female guiding elements may be provided with a cross section having, for example, an U- or V-shape. A leading edge of the guide formations on the male or female guiding element may be positively received in a groove provided on the other guiding element.

In some embodiment, the male guiding element may comprise a pressure measuring device such as one or more sensors and / or one or more actuators. When the male and female guiding elements are positively form-fitted, the pressure measuring device may detect pressure signals identifying variations in pressure exerted on at least one of the male guiding element and the female guiding element in the soil cultivating operation. As the wearing working tool contacts the soil, the pressure signals detected by the pressure measuring device may identify resistance encountered by the male and female guiding elements.

Variations in pressure identified by the pressure signals may be indicative of change in soil condition, such as wearability over time of the wearing working tool, compaction levels, moisture content, or the presence of obstacles. Data indicating the pressure signals may be transmitted, for example, in real-time to a monitoring system or a (computing) device, providing valuable insights into soil characteristics allowing for timely or on-the-go adjustment and interventions to maximize crop yield and minimize environmental impact.

In an embodiment, the assembly may comprise a sensor device operable to detect sensor signals identifying the first and second connecting part being positively or form-fitted connected in the end position. This safety feature is implemented to prevent the risk of accidental disengagement during transportation or operation.

The second non-wearing plough part may be located on a non-soil-contact side of the wearing working tool. With respect to such embodiment, the second non-wearing plough part is attached to the non-soil-contact side of the wearing working tool. With respect to soil contact in operation, the second non-wearing plough part may be located on an inside of the wearing working tool. There may be detachable or non-detachable attachment.

The first non-wearing plough part may comprise a beam of the plough and the second non-wearing plough part comprises a frog of the plough, the beam and the frog being detachably connected by the connection between the first and second connecting part. Generally, the beam of the plough is provided for holding one or more wearing working tools of the plough. The one or more wearing working tools may comprise at least one of the following: coulter, plough share, landside, point, point holder, shin piece, and mouldboard. A single working tool or a plurality of wearing working tools may be attached to the frog directly and indirectly. The frog may also be referred to as saddle.

In an embodiment, an assembly of wearing plough parts comprising a group of or all wearing working tools, together with the second non-wearing plough part such as the frog or saddle, may be detachably connected to the beam by means of the connection between the first and second connecting part.

Further, the assembly may comprise a locking mechanism configured to lock against relative movement if the first connecting part and the second connecting part are engaged by the connection. The locking mechanism may be operable to lock against relative movement if the first connecting part and the second connecting part are positively engaged by the connection.

By means of the detachable connection between the first and second connecting part the frog may be connected to a lower end of the beam. The detachable connection allows for having a frog connected to the beam, wherein the frog may carry or hold one or more different wearing working tools of the plough depending on a working task for soil cultivation. After having established the connection between the first and second connecting part, i.e. the first and second connecting part are provided in the end position, the first and second connecting part can be locked or secured in such end position against unintentionally separating the first and second connecting part. The locking mechanism may be provided with an activation element for activating and deactivating the locking mechanism. The activation element may be a tool-free operable activation element. The activation element may be replaceable between a first position in which locking is established and second position in which the first and second connecting part are separatable (unlocked). The activation element may comprise a lever which may be rotatable between the first and second position.

In an embodiment, a leading element of the activation element may be received in a recess in the second position for locking the first and second connecting part. For unlocking, the leading element of the activation element may get out of the recess by means of operating the activation element by a user. The activation element may be provided on one of the first and second connecting part, while the recess is provided on the other part of the first and second connecting part.

The activation element may be provided in a reward position with respect to the first and second connecting part, for example, opposite an inside of a wearing working tool of the plough. Thereby, the activation element will be protected from direct soil contact in the soil working operation.

The locking mechanism may be tool-free operable for locking and unlocking. In an alternative embodiment, operating the locking mechanism for locking and unlocking may require application of a tool.

The locking mechanism may be provided on at least one of the first connecting part and the second connecting part in a rearward position with respect to the working direction.

The assembly may further comprise a support element configured to hold the first connecting part in a lifted position above ground, if the first connecting part disengaged from the second connecting part is positioned in a resting position on the ground. After having disconnected the connection between the first and second connecting part the assembly may be provided in the resting position on the ground. The first connecting part attached, for example, to the beam of the plough will be prevented from potential damage by means of the support element holding the first connecting part in the lifted position above the ground. The support element may comprise a holding arm attached to at least one of the first connecting part and the first non-wearing part and a support part attached to the holding arm and configured to rest on the ground. The support element may be attached to at least one of the first connecting part and the first non-wearing part by a detachable or a non-detachable connection. For example, a welded connection may be provided.

In an embodiment, the support element may provide for a multi-functional element. In addition to holding the first connecting part in the lifted position, the support element may provide for a pushing element which can be act on by the user for pushing the first connecting part when establishing the connection between the first and second connecting part. For example, the support element may provide for a foot or arm activated pushing element. In an example, the support part attached to the holding arm may be a foot-pushing part. The support element may be fixed or attached to a plough frame, and the body moves relative to the plough to get it into one of a positive position, form-fit position, engaged position, and locked position.

The support element may be provided on the first connecting part in a rearward position with respect to the working direction.

With respect to at least one of the plough, the agricultural machine, and the spare part for the assembly for the plough of an agricultural soil working machine, embodiments described above with respect to the assembly may apply *mutatis mutandis.*

### Description of further embodiments

Following, further embodiments are described by referring to figures. In the figures, show:
- Fig. 1: a schematic representation of an assembly for a plough of an agricultural soil working machine, wherein a first and second non-wearing plough part are connected by means of a connection detachably connecting a first and second connecting part;
- Fig. 2: a schematic representation of the assembly in Fig. 1, wherein the first and second connecting part are separated;
- Fig. 3: a schematic representation of the assembly in Fig. 1 in a side view;
- Fig. 4: a schematic representation of the assembly in Fig. 2 in a side view;
- Fig. 5: a schematic representation of the connection between the first and second connecting part of the assembly in Fig. 1 in greater detail;
- Fig. 6: a schematic representation of the first and second connecting part being separated as in Fig. 2 in greater detail; and
- Fig. 7: a schematic representation of another embodiment, wherein the first and second con-necting part are separated.

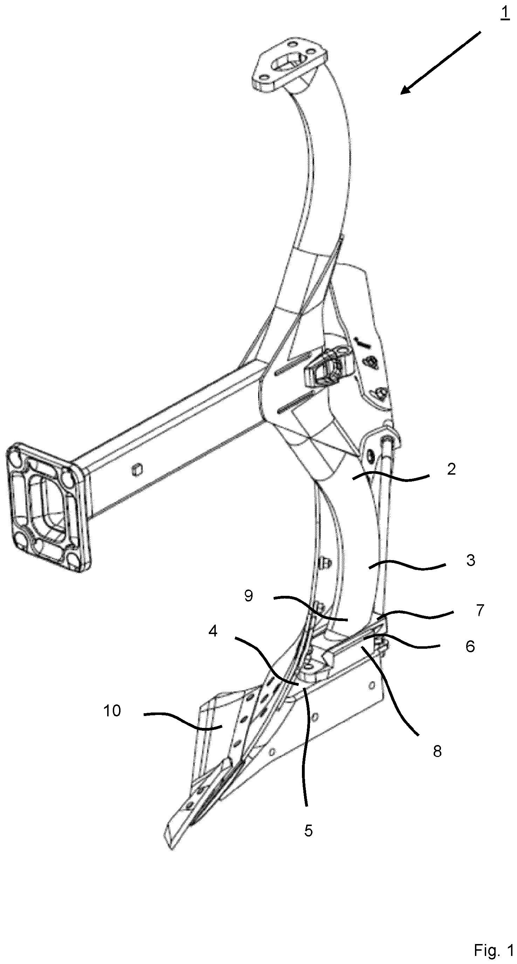

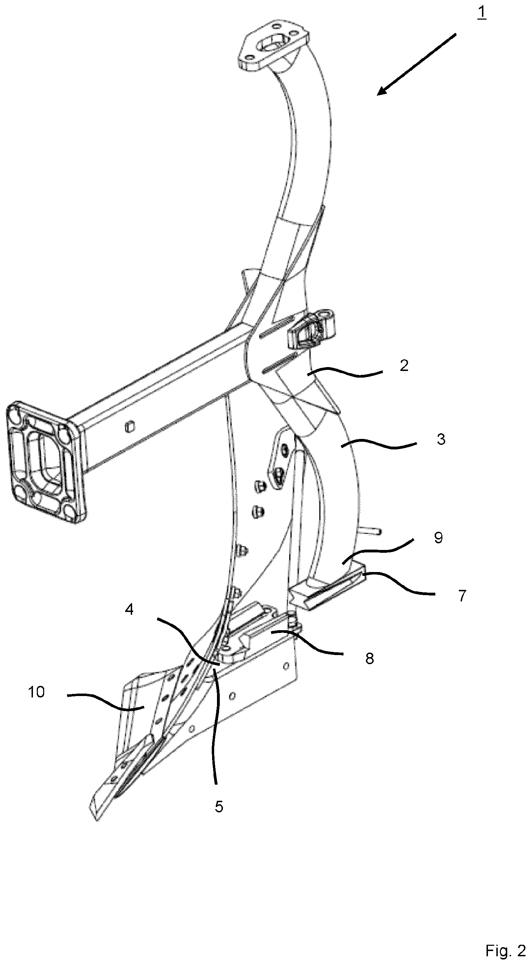

Referring to Fig. 1 and 2, an assembly 1 for a plough of an agricultural soil working machine is depicted. A first non-wearing plough part 2 comprising a beam 3 which is tool-free and detachably connected to a second non-wearing plough part 4 comprising a frog 5 by means of a connection 6 detachably connecting a first connecting part 7 and the second connecting part 8. The first connecting part 7 is provided at a lower end 9 of the beam 3. The first connecting part 7 may be attached to the beam 3 by a detachable or non-detachable connection. Similarly, the frog 5 may be attached to a wearing working tool 10 of the assembly 1 by means of a detachable or non-detachable connection.

The frog 5 is provided on an inside 11 of the wearing working tool 10 which may be, for example, one of a plough share, point, point holder, shin piece, landside, a mainshare, and mouldboard of the plough. The frog 5 is holding such wearing working tool 10. In operation of an agricultural soil working machine provided with the assembly 1, the wearing working tool 10 will be in direct contact with the soil, while the frog 5 and the beam 3 providing for the first and second non-working plough part 2, 4, respectively, do not get in direct contact with the soil. Thus, there is no wearing due to soil contact.

Referring to Fig. 2, the first and second connecting part 7, 8 are separated or disconnected from each other, thereby, releasing the connection 6 and separating the frog 5 from the beam 3 of the plough. This allows for attaching a different wearing working tool (not shown) to the beam 3.

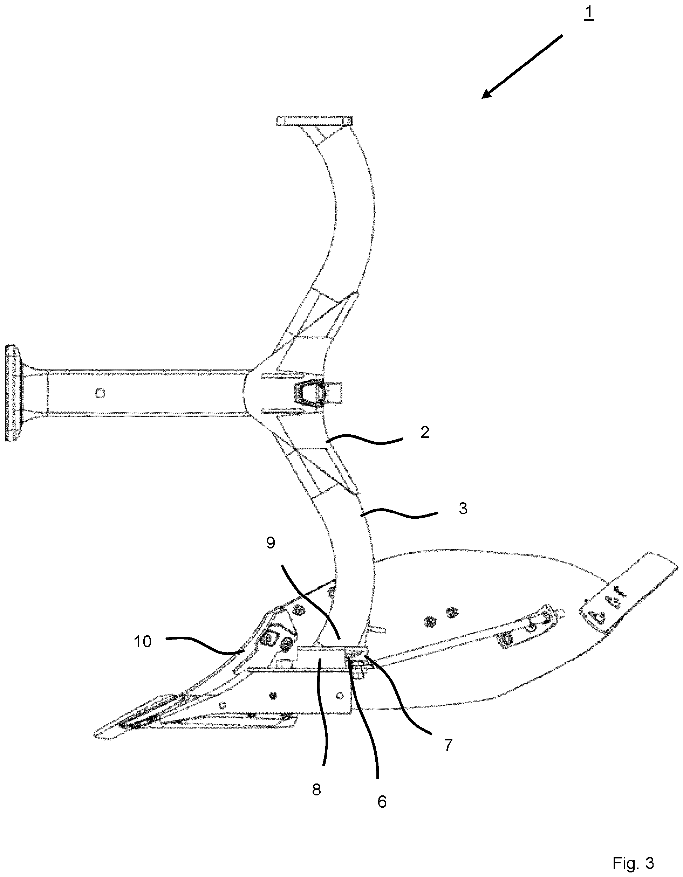

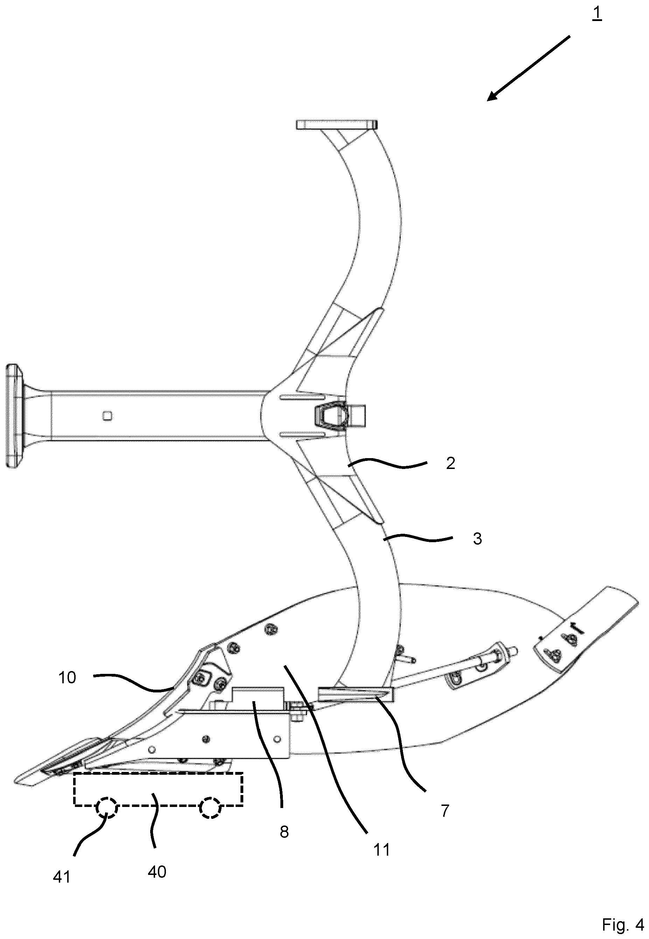

Fig. 3 and 4 show the assembly 1 from Fig. 1 and 2, respectively, in a side view.

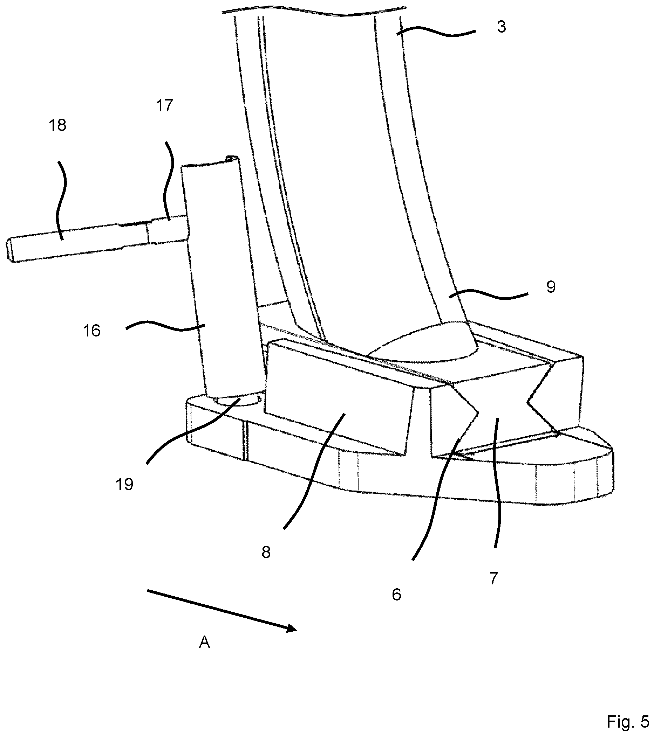

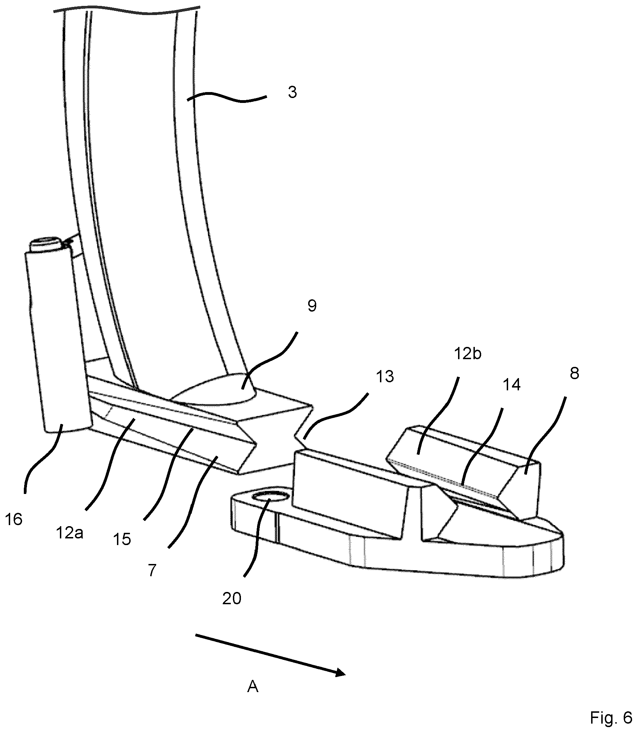

Referring to Fig. 5 and 6, the connection 6, and the first and second connecting part 7, 8 are shown in greater detail. The first and second connecting part 7, 8 are provided with guide formations 12a, 12b of a sliding or guiding mechanism 13. The second guide formations 12b comprise a leading edge 14 and are having a V-shape in cross-section. Alternatively, a U-shape may be provided. If the first and second connecting part 7, 8 are moved into an engaged position (see Fig. 5) which may also be referred to as end position, the leading edge 14 of the second guide formation 12b are positively received in opposite grooves 15 of the first guide formation 12a provided on the first connecting part 7 and also having a V-shape.

Starting from a start position in which the first and second connecting part 7, 8 get into first contact for establishing the connection 6, the first and second connecting part 7, 8 are guided by the guide formation 12a, 12b for sliding into the end position shown in Fig. 5 (see also Fig. 1 and 3. In the process of establishing the connection 6 by means of the sliding mechanism 13, relative movement between the first and second connecting part 7, 8 is essentially parallel to a working direction (see arrow A in Fig. 5 and 6) in which the plough will be moved during soil operation. Thus, in soil operation forces applied to the assembly 1 because of soil contact along the working direction A will support keeping up the connection 6 between the first and second connecting part 7, 8.

The sliding or guiding mechanism 13 is provided with a conical shape, for example, when looking from above (see also Fig. 6). This will provide for exerting a wedging action on the first connecting part 7 so that the greater the distance travelled by the first connecting part 7 in establishing the connection 6, the stronger will be frictional engagement forces acting between the guide formations 12a, 12b, whereby, the first connecting part 7 can be driven by a force extending generally parallel to the working direction A in order to take up the working or end position (see Fig. 5) in which the first connection part 7 is positively connected to the second connecting part 8.

Referring to Fig. 4, optionally a plough part which is provided by or comprising at least one of the second connecting part 8, the second non-wearing plough part 4, and the wearing working tool 10 may be resting or located on a support element 40. The support element 40 is supporting the plough part at a height above ground during sliding between the start and end position. With respect to the height above ground supported by the support element 40, the support element 40 which may also be referred to as support table may be adjustable in height and / or width. Further, according to the example shown, the support element 40 comprises a moving device 41 configured for moving the support element 40 with the plough part received on the support element 40 while connecting the first and second connecting part 7, 8. For example, the moving device 41 may comprise one or more rollers or sliders configured to move the support element 40 on ground. Alternatively, the support element 40 may be configured for just supporting the plough part above ground, but not for moving, thereby, still supporting the plough part in a position for facilitating connecting and separating the first and second connecting part 7, 8.

Referring still to Fig. 5 to 7, a locking mechanism 16 is provided. The locking mechanism 16 is configured to lock against relative movement between the first and second connecting part 7, 8, when the first connecting part 7 and the second connecting part 8 are engaged by the connection 6 as shown in Fig. 1, 3, and 5. The locking mechanism 16, according to the embodiment shown, is provided with an activation element 17 comprising a lever 18 replaceable by rotation between a first position and a second position (locking and unlocking position) shown in Fig. 5 and 6, respectively. In the first position shown in Fig. 5 a locking element 19 of the activation element 17 is received in recess 20 provided on the second connecting part 8, thereby, locking the connection 6 between the first and second connecting part 7, 8. By rotating the lever 18 into an opposite direction, the locking element 19 which is in functional connection with the lever 18 is released from the recess 20, thereby, unlocking the connection 6.

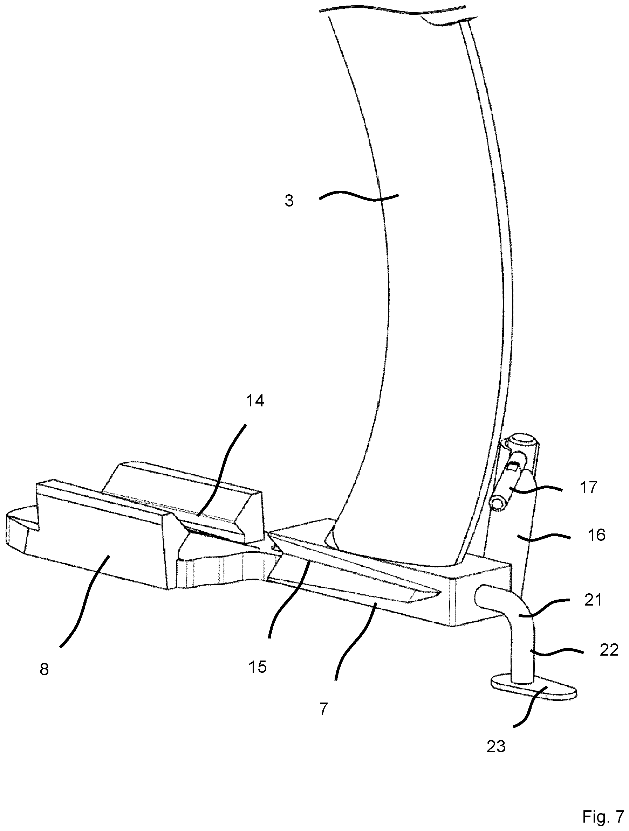

Fig. 7 shows a schematic representation of another embodiment, wherein the first and second connecting part 7, 8 are separated. A support element 21 is provided on the first connecting part 7. The support element 21 is provided on the first connecting part 7 in a rearward position with respect to the working direction A. The support element 21 is configured to hold the first connecting part in a lifted position above ground, if the first connecting part 7 provided on the beam 3 and disengaged from the second connecting part 8 is positioned in a resting position on the ground as shown in Fig. 7. After having disconnected the connection 6 between the first and second connecting part 7, 8, the beam 3 having attached the first connecting part 7 may be provided in the resting position on the ground. The first connecting part 7 attached to the beam 3 of the plough will be prevented from potential damage by means of the support element 21 holding the first connecting part 7 in the lifted positioned above the ground. The support element 21 comprises a holding arm 22 attached to the first connecting part 7, and a support part 23 attached to the holding arm 22 and configured to rest on the ground. The support element 21 may be attached to the first connecting part 7 by a detachable or non-detachable connection. For example, a welded connection is provided.

In an embodiment, the support element 21 may provide for multi-functionality. In addition to holding the first connecting part 7 in the lifted position, the support element 21 may provide for a pushing element which can be acted on by the user for pushing the first connecting part 7 when establishing the connection 6 between the first and second connecting part 7. For example, the support element 21 may provide for a foot activated pushing element. In the example shown, the support part 23 attached to the holding arm 22 is provided with a foot-pushing part.

The features or limitations disclosed in this specification, the figures and / or the claims may be material for the realization of various embodiments, taken in isolation or in various combinations thereof.

## Claims

1. An assembly (1) for a plough of an agricultural soil working machine, comprising:
- a first non-wearing plough part (2) configured to hold a wearing working tool (10) getting in contact with soil in soil working operation;
- a second non-wearing plough part (4) having the wearing working tool (10) attached to the second non-wearing plough part (4);
- a first connecting part (7) attached to the first non-wearing part (2);
- a second connecting part (8) attached to the second non-wearing plough part (4); and
- a connection (6) detachably connecting the first connecting part (7) and the second connecting part (8);
wherein the second non-wearing plough part (4) is tool-free and detachably mounted to the first non-wearing plough part (2) by the connection (6).

2. Assembly (1) of claim 1, wherein the first connecting part (7) and the second connecting part (8) are positively connected in the connection (6).

3. Assembly (1) of claim 1 or 2, wherein the detachable connection (6) is comprising a sliding mechanism (13) configured to guide relative movement of the first connecting part (7) and the second connecting part (8) with respect to each other between a start position in which the first connecting part (7) and the second connecting part (8) are in first contact for establishing the connection (6) and an end position in which the connection (6) between the first connecting part (7) and the second connecting part (8) is established.

4. Assembly (1) of claim 3, wherein the first connecting part (7) and the second connecting part (8) are in frictional engagement in the end position.

5. Assembly (1) of claim 3 or 4, wherein the sliding mechanism (13) is configured to guide the relative movement of the first connecting part (7) and the second connecting part (8) along a guiding direction essentially parallel to a working direction (A) of the plough.

6. Assembly (1) of at least one of claims 3 to 5, wherein the sliding mechanism (13) comprises a male guiding element (12a) and a female guiding element (12b) positively received in the male guiding element (12a) for the relative movement of the first connecting part (7) and the second connecting part (8) between the start position and the end position.

7. Assembly (1) of at least one of the preceding claims, wherein the second non-wearing plough part (4) is located on a non-soil-contact side (11) of the wearing working tool (10).

8. Assembly (1) of at least one of the preceding claims, wherein the first non-wearing plough part (2) comprises a beam (3) of the plough and the second non-wearing plough part (4) comprises a frog (5) of the plough, the beam (3) and the frog (5) being detachably connected by the connection (6).

9. Assembly (1) of at least one of the preceding claims, further comprising a locking mechanism (16) configured to lock against relative movement if the first connecting part (7) and the second connecting part (8) are engaged by the connection (6).

10. Assembly (1) of claim 9, wherein the locking mechanism (16) is tool-free operable for locking and unlocking.

11. Assembly (1) of claim 9 or 10, wherein the locking mechanism is provided on at least one of the first connecting part (7) and the second connecting part (8) in a rearward position with respect to the working direction (A).

12. Assembly (1) of at least one of the preceding claims, further comprising a support element (21) configured to hold the first connecting part (7) in a lifted position above ground, if the first connecting part (7) disengaged from the second connecting part (8) is positioned in a resting position on the ground.

13. Assembly (1) of claim 12, wherein the support element (21) is provided on the first connecting part (7) in a rearward position with respect to the working direction.

14. A plough for an agricultural soil working machine, comprising an assembly (1) of at least one of the preceding claims.

15. An agricultural soil working machine, comprising a plough of claim 14.

16. A spare part for an assembly (1) for a plough of an agricultural soil working machine of at least one of the preceding claims 1 to 13, comprising
- a second non-wearing plough part (4) configured to hold a wearing working tool (10) getting in contact with soil in soil working operation; and
- a second connecting part (8) attached to the second non-wearing part (4);
wherein the second connecting part (8) is configured to engage with a first connecting part (7) attached to a first non-wearing plough part (2) in a connection (6) detachably connecting the first connecting part (7) and the second connecting part (8), thereby, tool-free and detachably mounting the second non-wearing plough part (4) to the first non-wearing plough part (2) by the connection (6).
